# EUROPÄISCHE PATENTANMELDUNG

(11) **EP 0 755 973 A1**
(43) Veröffentlichungstag der Anmeldung: **29.01.1997**
(21) Anmeldenummer: 96111940.1
(22) Anmeldetag: 24.07.1996
(51) Int. Cl.: C08L 59/02, C08L 59/04

(54) **Schlagzähmodifizierte Polyoxy-methylen-Zusammensetzung**

(30) Priorität: 25.07.1995 DE 19527142
(71) Anmelder: BASF AKTIENGESELLSCHAFT, 67056 Ludwigshafen (DE)
(72) Erfinder: Kielhorn-Bayer, Sabine, Dr., 67133 Maxdorf (DE); Mühlbacher, Klaus Dr., Wyandotte, MI 48192 (US); McKee, Graham Edmund, Dr., 67433 Neustadt (DE)
(74) Vertreter: Isenbruck, Günter, Dr.

(57) **Zusammenfassung**

Schlagzähmodifizierte Polyoxymethylen-Zusammensetzung mit 5 bis 10 Gew.-% Acrylnitril-Styrol-Acrylat, 10 bis 15 Gew.-% thermoplastischen Polyurethanen und 75 bis 85 Gew.-% Polyoxymethylen, so daß diese Komponenten gemeinsam 100 Gew.-% ergeben, sowie 0 bis 50 Gew.-%, bezogen auf die Summe der Komponenten Acrylnitril-Styrol-Acrylat, thermoplastische Polyurethane und Polyoxymethylen, an üblichen Zusatzstoffen und Verarbeitungshilfsmitteln.

## Beschreibung

Die Erfindung betrifft die Zusammensetzung schlagzähmodifizierter und mattierter Polyoxymethylene und deren Verwendung zur Herstellung von Formkörpern.

Polyoxymethylene werden in vielen Bereichen der Industrie zur Herstellung von Kunststofformteilen verwendet. Nachteilig ist jedoch ihre geringe Schlagzähigkeit, weshalb sie durch Zugabe anderer Kunststoffe modifiziert werden. Die europäische Patentanmeldung 0 116 456 schlägt die Modifizierung einer Polyoxymethylenmischung mit thermoplastischen Polyurethanen vor. Dabei werden bis zu 40 Gew.-% Polyurethane mit einer Glasübergangstemperatur < -15 °C der Polyoxymethylenmischung beigegeben. Nachteil dieser Zusammensetzung ist die Abnahme des Zug-Elastizitätsmoduls mit steigender Schlagzähigkeit des Kunststoffs.

Diesen Nachteil weist auch die Zusammensetzung gemäß der europäischen Patentanmeldung 0 117 664 auf, bei der einer Polyoxymethylenmischung bis zu 15 Gew.- % thermoplastische Polyurethane mit einer Glasübergangstemperatur < 0 °C in Form diskreter Partikel beigegeben wird. Auch die Zusammensetzung nach der europäischen Patentanmeldung 0 120 711, bei der dem Polyoxymethylen bis zu 40 Gew.-% thermoplastische Polyurethane mit einer Glasübergangstemperatur < 0 °C zugegeben werden, kann dieses Problem nicht zufriedenstellend lösen.

Die europäische Patentanmeldung 0 440 441 beschreibt eine Polymermischung aus aromatischen Monovinylidencopolymeren und Acetalpolymeren, die durch Zugabe thermoplastischer Polyurethane oder elastomerer Polyester modifiziert wird. Die dort vorgeschlagene Modifikation führt lediglich zu erhöhter Schlagzähigkeit bei leicht verminderter Elastizität. Im übrigen weisen die daraus hergestellten Formteile eine glänzende Oberfläche auf, die bei vielen Anwendungen, insbesondere bei optischen Artikeln, nicht erwünscht ist.

Auch die in EP 0 286 290 vorgeschlagene Mischung aus Polyester, Polycarbonat, α-Methylstyrol-modifiziertem ABS-Harz und einem weiteren Polymer aus der Gruppe Polycarbonat, gesättigte Polyester, Polyvinylether, Polyamid und Polyacetal mit organischem Phosphid bringt keinen ausreichenden Fortschritt in dieser Richtung. Das gleiche gilt für die in dem US Patent 3,597,498 beschriebenen Mischungen aus ABS-Harzen, Styrol, Vinylchloridharzen und Polyoxymethylen.

Nur eine geringe Verbesserung der Schlagzähigkeit bei gleichzeitig erhalten bleibender Zugfestigkeit beschreiben die Japanischen Patente J 61 023 640 und J 62 018 427. Die erstgenannte Patentschrift schlägt die Zugabe von Butadienpolymeren und Antioxidantien zu Polyacetal, Polycarbonat oder Polyethylenterephthalat vor. Die zweite Japanische Patentschrift offenbart verstärkte Kunststoffmaterialien, denen Polyoxymethylen zugegeben wurde.

Aufgabe der Erfindung ist somit die Bereitstellung schlagzähmodifizierter Polyoxymethylen-Zusammensetzungen mit gleichzeitig erhöhter Steifigkeit, die insbesondere bei der Verarbeitung in Formteilen zu einer matten Oberfläche führen.

Die Aufgabe wird durch die in den Ansprüchen beschriebene schlagzähmodifizierte Polyoxymethylen-Zusammensetzung gelöst. Diese besteht aus 5 bis 10 Gew.-% Acrylnitril-Styrol-Acrylat-Polymer (ASA), 10 bis 15 Gew.-% thermoplastischen Polyurethanen (TPU) und 75 bis 85 Gew.-% Polyoxymethylen (POM), so daß diese drei Bestandteile 100 Gew.-% ergeben.

Bezogen auf diese drei Bestandteile enthält die Zusammensetzung noch 0 bis 50 Gew.-% übliche Zusatzstoffe und Verarbeitungshilfsmittel.

Erfindungsgemäß können die in den Ansprüchen beschriebenen Zusammensetzungen zur Herstellung von Formkörpern verwendet werden. Unter den im Rahmen der Erfindung bereitgestellten Formkörpern werden alle mit einer definierten äußeren Form versehenen und aus oder unter Verwendung der in den Ansprüchen beschriebenen Polyoxymethylen-Zusammensetzungen hergestellten Werkstücke verstanden, unabhängig von der Herstellungsart.

### ASA-Komponente

Bevorzugt sind schlagzähmodifizierte Polyoxymethylen-Zusammensetzungen, bei denen die ASA-Komponente aus 30 bis 95, vorzugsweise 45 bis 80 Gew.-% einer ersten und 5 bis 70, vorzugsweise 20 bis 55 Gew.-% einer zweiten Phase besteht.

Die erste Phase besteht dabei aus einem oder mehreren harten Polymeren, wobei ein hartes Polymer aus einer Mischung hergestellt ist, die folgende Bestandteile enthält:
(1) 30 bis 95, vorzugsweise 50 bis 90, besonders bevorzugt 60 bis 85 Gew.-% mindestens eines vinylaromatischen Monomers.
   Als vinylaromatische Monomere kommen insbesondere Styrole der allgemeinen Formel 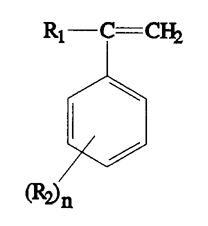 in Frage, wobei R₁ ein C₁- bis C₈-Alkylrest, Wasserstoff oder ein Halogenatom und R₂ ein C₁- bis C₈-Alkylrest oder ein Halogenatom bezeichnet und n den Wert 0, 1, 2 oder 3 annehmen kann. Auch Gemische mehrerer derartiger Styrole können verwendet werden. Neben Styrol sind die substituierten Styrole α-Methylstyrol, p-Methylstyrol, p-Chlorstyrol und p-Chlor-α-Methylstyrol bevorzugt. Styrol und α-Methylstyrol sind besonders bevorzugt.
(2) 0 bis 50, vorzugsweise 10 bis 40, besonders bevorzugt 15 bis 40 Gew.-% Acrylnitril und/oder Methacrylnitril.
(3) 0 bis 50, vorzugsweise 0 bis 40, besonders bevorzugt 0 bis 25 Gew.-% mindestens eines Esters der Acrylsäure oder Methacrylsäure, insbesondere Methylmethacrylat.
   Vorzugsweise werden Ester mit 1 bis 32 C-Atomen, insbesondere mit 1 bis 20 C-Atomen eingesetzt. Besonders bevorzugt sind Ester der Acryl- oder Methacrylsäure mit C₁ bis C₈-Alkoholen und Epoxygruppen enthaltende Ester wie Glycidylacrylat, Glycidylmethacrylat und n-Butylacrylat.
(4) 0 bis 40, vorzugsweise 0 bis 30, besonders bevorzugt 0 bis 20 Gew.-% mindestens eines weiteren ethylenisch ungesättigten Monomers. Vorzugsweise wird das Monomer aus folgender Gruppe ausgewählt: Maleinsäureanhydrid, Acrylamid, Methacrylamid, n-Phenylmaleinimid.
(5) 0 bis 70, vorzugsweise 0 bis 40, besonders bevorzugt 0 bis 35 Gew.-% weiterer Polymere.
   Bevorzugte weitere Polymere sind Polycarbonat und Polymethymethacrylat.

Die Bestandteile (1) bis (5) der ersten Phase ergeben zusammen 100 Gew.-%.

Diese erste Phase kann in Lösung, Suspension oder Emulsion hergestellt werden, z.B. nach den in DE-AS 10 01 001 und DE-AS 10 03 436 beschriebenen Verfahren. Geeignete Copolymere sind auch im Handel erhältlich. Der durch Lichtstreuung bestimmte gewichtete Mittelwert des Molekulargewichts derartiger Copolymere liegt vorzugsweise im Bereich von 50.000 bis 500.000, besonders bevorzugt von 100.000 bis 250.000.

Die Viskositätszahl dieser Copolymere, gemessen nach DIN 53727 als 0,5 gew.-%ige Lösung in Dimethylformamid bei 23 °C liegt im allgemeinen im Bereich von 40 bis 100, vorzugsweise von 50 bis 90 ml/g.

Vorzugsweise wird ein hartes Polymer der ersten Phase verwendet, dessen Glasübergangstemperatur größer 50 °C beträgt. Dabei wird die Glasübergangstemperatur nach der DSC-Methode von Illers bestimmt (Makromolekulare Chemie, 127 (1969), Seite 1).

Die zweite Phase besteht aus einem Pfropfkautschuk, der aus einer Mischung hergestellt ist, die folgende Bestandteile enthält:
(1) 20 bis 90, vorzugsweise 30 bis 80 Gew.-% mindestens eines Propfsubstrats mit einer Glasübergangstemperatur < 0 °C, vorzugsweise < -20 °C, das seinerseits aus einer Mischung hergestellt ist, die folgende Bestandteile enthält:
   i) 50 bis 100, vorzugsweise 75 bis 99 Gew.-% mindestens eines Esters der Acrylsäure, vorzugsweise n-Butylacrylat oder 2-Ethylhexylacrylat.
      Als Acrylsäureester werden vorzugsweise solche mit 1 bis 32 C-Atomen, insbesondere mit 1 bis 20 C-Atomen eingesetzt. Bevorzugt sind tertiäres, iso- und n-Butylacrylat sowie 2-Ethylhexylacrylat, wovon die beiden letztgenannten besonders bevorzugt werden.
   ii) 0 bis 20, vorzugsweise 1 bis 10 Gew.-% mindestens eines polyfunktionellen vernetzenden Monomers.
      Vorzugsweise wird dieses Monomer aus folgender Gruppe ausgewählt: Divinylbenzol, Diallylmaleat, Diallylfumarat, Diallylphthalat, Allylmethacrylat, Triallylisocyanurat, Triallylcyanurat, Butadien, Isopren, Dihydrodicyclopentadienylacrylat, besonders bevorzugt Dihydrodicyclopentadienylacrylat.
   iii) 0 bis 40, vorzugsweise 0 bis 20 Gew.-% mindestens eines weiteren monoethylenisch ungesättigten Monomers.
      Vorzugsweise wird dieses Monomer aus folgender Gruppe ausgewählt: Methylvinylether, Styrol, Acrylnitril, Derivate der Acryl- oder Methacrylsäure, insbesondere Methacrylat, Methylmethacrylat, Ethylacrylat, Glycidylacrylat, Glycidylmethacrylat, substituierte oder unsubstituierte Butadiene, substituierte oder unsubstituierte Isoprene.

   Die Bestandteile i) bis iii) ergeben zusammen 100 Gew.-%.
   Verfahren zur Herstellung des Pfropfsubstrats sind an sich bekannt und zum Beispiel in DE-B 12 60 135 beschrieben. In einigen Fällen hat sich die Herstellung durch Emulsionspolymerisation als besonders vorteilhaft erwiesen.
   Die Polymerisationsbedingungen, insbesondere Art, Dosierung und Menge des Emulgators, werden vorzugsweise so gewählt, daß der Latex des Acrylsäureesters, der bevorzugt vernetzt ist, eine mittlere Teilchengröße (d₅₀-Gewichtsmittelwert) kleiner 1000, vorzugsweise kleiner 700 nm, aufweist.
(2) 10 bis 80, vorzugsweise 10 bis 60 Gew.-% mindestens einer Pfropfauflage, die ihrerseits aus einer Mischung hergestellt ist, die folgende Bestandteile enthält:
   i) 20 bis 90, vorzugsweise 40 bis 85, besonders bevorzugt 60 bis 80 Gew.-% mindestens eines vinylaromatischen Monomers. Bezüglich der geeigneten vinylaromatischen Monomere gilt das oben zur ersten Phase Gesagte entsprechend.
   ii) 5 bis 40, vorzugsweise 10 bis 35, besonders bevorzugt 15 bis 30 Gew.-% Methacrylnitril und/oder Acrylnitril.
   iii) 0 bis 50, vorzugsweise 0 bis 30, besonders bevorzugt 0 bis 20 Gew.-% mindestens eines Esters der Acrylsäure oder Methacrylsäure, insbesondere Methylmethacrylat.
      Bezüglich der geeigneten Ester gilt das oben zur ersten Phase Gesagte entsprechend.
   iv) 0 bis 50, vorzugsweise 0 bis 45, besonders bevorzugt 0 bis 25 Gew.-% mindestens eines weiteren ethylenisch ungesättigten Monomers.
      Vorzugsweise wird das Monomer aus folgender Gruppe ausgewählt: Maleinsäureanhydrid, Acrylamid, Methacrylamid, n-Phenylmaleinimid.
   Die Bestandteile i) bis iv) ergeben zusammen 100 Gew.-%.

Die zweite Phase kann bei gleicher Zusammensetzung in einem oder mehreren Verfahrensschritten hergestellt werden. Diese Herstellung erfolgt vorzugsweise in Emulsion, wie dies in DE PS 12 60 135, DE OS 32 27 555, DE OS 31 49 357 und DE-OS 34 14 118 beschrieben ist.

In Abhängigkeit von den gewählten Verfahrensbedingungen entsteht bei der Pfropfmischpolymerisation ein bestimmter Anteil an freien Copolymerisaten von Styrol bzw. substituierten Styrolderivaten und Acryl- oder Methacryl- bzw. Acrylsäure- oder Methacrylsäureestern.

Diese Copolymerisate weisen im allgemeinen eine mittlere Teilchengröße < 1000, vorzugsweise < 700 nm, auf (d₅₀-Gewichtsmittelwert).

Die Verfahrensbedingungen bei der Herstellung des Pfropfkautschuks der zweiten Phase werden daher vorzugsweise so gewählt, daß Teilchengrößen in dem bevorzugten Bereich entstehen. Entsprechende Maßnahmen zur Erreichung dieses Zieles sind an sich bekannt und z.B. in DE-PS 12 60 135 und DE-OS 28 26 925 sowie in Journal of Applied Polymer Science, Vol. 9 (1965), S. 2929 bis 2938, beschrieben. Eine Teilchenvergrößerung des Latex des Elastomeren kann etwa mittels Agglomeration bewerkstelligt werden.

Vorzugsweise werden Copolymere der zweiten Phase verwendet, die aus 60 Gew.-% eines Pfropfsubstrats und aus 40 Gew.-% einer Pfropfauflage bestehen, wobei das Pfropfsubstrat seinerseits aus 98 Gew.-% n-Butylacrylat und 2 Gew.-% Dihydrodicyclopentadienylacrylat, und die Pfropfauflage ihrerseits aus 70 bis 80 Gew.-% Styrol und 20 bis 30 Gew.-% Acrylnitril zusammengesetzt ist.

Ein weiteres bevorzugtes Copolymer der zweiten Phase besteht aus 60 Gew.-% eines Pfropfsubstrats, das seinerseits aus 98 Gew.-% n-Butylacrylat und 2 Gew.-% Dihydrodicyclopentadienylacrylat besteht, aus einer ersten Pfropfauflage aus 5 Gew.-% Styrol und aus 35 Gew.-% einer zweiten Pfropfauflage, die ihrerseits aus 75 Gew.-% Styrol und 25 Gew.-% Acrylnitril besteht.

Ein weiteres bevorzugtes Copolymer der zweiten Phase ist aus 60 Gew.-% eines Pfropfsubstrats, 13 Gew.-% einer ersten und 27 Gew.-% einer zweiten Pfropfauflage zusammengesetzt, wobei das Pfropfsubstrat aus 98 Gew.-% n-Butylacrylat und 2 Gew.-% Dihydrodicyclopentadienylacrylat besteht, die erste Pfropfauflage aus Styrol besteht und die zweite Pfropfauflage aus 75 Gew.-% Styrol und 25 Gew.-% Acrylnitril zusammengesetzt ist.

### TPU-Komponente

Im Rahmen der Erfindung geeignete thermoplastische Polyurethane können beispielsweise hergestellt werden durch Umsetzung von
a) organischen, vorzugsweise aromatischen Diisocyanaten,
b) Polyhydroxylverbindungen mit Molekulargewichten von 500 bis 8000,
c) Kettenverlängerungsmitteln mit Molekulargewichten von 60 bis 400, gegebenenfalls in Gegenwart von
d) Katalysatoren und
e) Hilfsmitteln und/oder Zusatzstoffen.

Zu diesen Komponenten ist folgendes auszuführen:

Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylendiisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethandiisocyanat. Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-(1,2) und 1,5-Naphthylen-diisocyanat. Vorzugsweise verwendet werden Hexamethylendiisocyanat, Isophoron-diisocyanat, 1,5-Naphthylen-diisocyanat, Diphenylmethan-diisocyanat-Isomerengemische mit einem 4,4'-Diphenylmethan-diisocyanat-Gehalt von größer als 96 Gew.-% und insbesondere 4,4'-Diphenylmethan-diisocyanat.

Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylen-Zusammensetzung und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2- und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-diethanolamine, beispielsweise N-methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).

Vorzugsweise verwendet werden Polyetherole aus Propylenoxid-1,2 und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist, z.B. insbesondere Polyoxytetramethylenglykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8000, vorzugsweise 600 bis 6000, und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Dialkylenglykol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen Molekulargewichte von 500 bis 8000, vorzugsweise von 800 bis 3500.

Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diamino-dicyclohexylmethan, 3,3'-Dimethyl-4,4'-diamino-dicyclohexylmethan, Isophoron-diamin, Ethylendiamin, 1,2-, 1,3-Propylen-diamin, N-Methyl-propylendiamin-1,3, N,N'-Dimethyl-ethylendiamin und aromatische Diamine, wie z.B. 2,4- und 2,6-Toluylen-diamin, 3,5-Diethyl-2,4- und -2,6-toluylen-diamin und primäre ortho-di-, tri- und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der TPU mit zunehmendem Gehalt an Diolen ansteigt.

Zur Herstellung der TPU werden die Aufbaukomponenten (a), (b) und (c) gegebenenfalls in Gegenwart von Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1:1,20, vorzugsweise 1:0,95 bis 1:1,05 und insbesondere 1:0,98 bis 1:1,02 beträgt.

Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

Neben Katalysatoren können den Aufbaukomponenten (a) bis (c) auch Hilfsmittel und/oder Zusatzstoffe (e) zugegeben werden. Genannt seien beispiels-weise Gleitmittel, Inhibitoren, Stabilisatoren gegen Hydrolyse, Licht, Hitze oder Verfärbung und Weichmacher.

Nähere Angaben über die oben genannten Hilfsmittel- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

### POM-Komponente

Die Polyoxymethylen-Zusammensetzung kann ein Homo- oder Copolymerisat sein. Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymere werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, die neben den wiederkehrenden Einheiten -CH₂O- noch bis zu 50, vorzugsweise 0,1 bis 20 und insbesondere 0,3 bis 10 mol-% an wiederkehrenden Einheiten 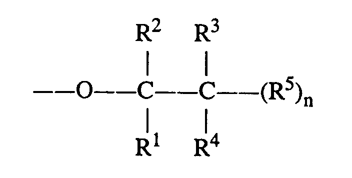 aufweisen, wobei R¹ bis R⁴ unabhängig voneinander ein Wasserstoffatom, eine C₁- bis C₄-Alkylgruppe oder eine halogensubstituierte Alkylgruppe mit 1 bis 4 C-Atomen und R⁵ eine -CH₂-, -CH₂O-, eine C₁- bis C₄-Alkyl- oder C₁- bis C₄-Haloalkyl-substituierte Methylengruppe oder eine entsprechende Oxymethylengruppe darstellen und n einen Wert im Bereich von 0 bis 3 annehmen kann. Vorteilhafterweise können diese Gruppen durch Ringöffnung von cyclischen Ethern in die Copolymere eingeführt werden. Bevorzugte cyclische Ether sind solche der Formel 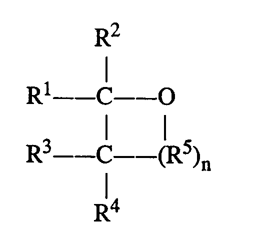 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan als Comonomere genannt.

Als Polyoxymethylen-Komponente ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel 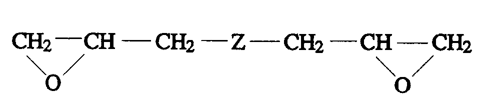 wobei Z eine chemische Bindung, -O-, -ORO- (R = C₁- bis C₈-Alkylen oder C₂- bis C₈-Cycloalkylen) ist, hergestellt werden.

Bevorzugte Monomere dieser Art sind Ethylendiglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol.

Verfahren zur Herstellung der vorstehend beschriebenen Homo- und Copolymerisate sind dem Fachmann bekannt und in der Literatur beschrieben.

Die bevorzugten Polyoxymethylencopolymere haben Schmelzpunkte von mindestens 150 °C und Molekulargewichte (Gewichtsmittelwert) von 5.000 bis 200.000, vorzugsweise von 7.000 bis 150.000.

Endgruppenstabilisierte Polyoxymethylenpolymerisate, die an den Kettenenden C-C-Bindungen aufweisen, werden besonders bevorzugt.

Als Polyoxymethylen-Komponente können insbesondere auch Produkte eingesetzt werden, die noch einen relativ hohen Anteil, d.h. bis zu 20 Gew.-%, bezogen auf die Polyoxymethylen-Gesamtmenge, an thermisch instabilen Kettenenden enthalten. Vorzugsweise beträgt der Anteil der thermisch instabilen Kettenenden jedoch nicht mehr als 10 Gew.-%, insbesondere nicht mehr als 5 Gew.-%

### Bevorzugte Polvoxymethylen-Zusammensetzungen

Neben den Polyoxymethylen-, Acrylnitril-Styrol-Acrylat- und Polyurethan-Komponenten können die erfindungsgemäßen Formmassen auch bis zu 50 Gew.-%, bezogen auf die Gesamtmasse des schlagzähmodifizierten Polyoxymethylen an üblichen Zusatzstoffen und Verarbeitungshilfsmitteln enthalten. Vorzugsweise enthält die Formmasse höchstens 30, besonders bevorzugt nicht mehr als 20 Gew.-% Zusatzstoffe und Verarbeitungshilfsmittel. Nur beispielhaft seien hier Zusätze zum Abfangen von Formaldehyd (Formaldehyd-Scavenger), Weichmacher, Schmiermittel, Antioxidantien, Haftvermittler, Lichtstabilisatoren und Pigmente genannt. Der Anteil solcher Zusätze liegt im allgemeinen im Bereich von 0,001 bis 5 Gew.-%, bezogen auf die gesamte Formmasse.

Die erfindungsgemäßen Formmassen können auch ein Nukleierungsmittel, vorzugsweise ein Melamin-Formaldehyd-Kondensat enthalten. Geeignete Produkte werden z.B. in der DE 25 40 207 beschrieben.

Entsprechende Verbindungen sind dem Fachmann bekannt und beispielsweise in EP 0 327 384 beschrieben.

### BEISPIELE

Um die Schlagzähigkeit und die Zugelastizität der erfindungsgemäßen, mittels Zugabe von Acrylnitril-Styrol-Acrylat schlagzähmodifizierten Polyoxymethylen-Zusammensetzung im Vergleich zu herkömmlichen ABS-modifizierten Polyoxymethylenen zu vergleichen, wurden zwei erfindungsgemäße und drei herkömmliche Formmassen hergestellt. Dabei wurde auch die Mattheit gespritzter Formteile bestimmt.

Für alle Formmassen wurde ein Polyoxymethylen-Copolymerisat mit 97,3 Gew.-% Trioxan und 2,7 Gew.-% Butandiolformal verwendet. Das Copolymerisat enthielt noch etwa 3 Gew.-% nicht umgesetztes Trioxan und etwa 5 Gew.-% thermisch instabile Kettenenden. Nach Abbau der thermisch instabilen Anteile hatte das Copolymer einen Schmelzindex von 10 g/10 min., gemessen nach DIN 53735 bei 190 °C bei einer Masse von 2,16 kg.

Das thermoplastische Polyurethan bestand in allen Fällen aus 41,4 Gew.-% Adipinsäure, 24,1 Gew.-% Methylendiphenyl-4,4'-diisocyanat, 33,8 Gew.-% Butan-1,4-diol und 0,7 Gew.-% Bis-(2,6-diisopropylphenyl)-carbodiimid.

Das ABS für die ABS-modifizierten Vergleichsformmassen wurde aus zwei Komponenten hergestellt.

Die erste Komponente bestand aus einem in Emulsion mit Hilfe eines zweistufigen Verfahrens hergestellten Pfropfkautschuk, bestehend aus 60 Gewichtsteilen Butadien und 40 Gewichtsteilen Styrol-Acrylnitril mit einem Gewichtsverhältnis von 70% Styrol zu 30% Acrylnitril.

In der ersten Verfahrensstufe wurde Butadien in Gegenwart von 1 Gew.-%, bezogen auf die verarbeitete Menge an Butadien, t-Dodecylmercaptan als Reaktionsregler polymerisiert. Danach wurden die Teilchen mit einem mittleren Durchmesser von etwa 0,1 µm gezielt agglomeriert, indem 2 Gew.-%, bezogen auf die verarbeiteten Teilchen, einer Ethylacrylat-Methacrylimid-Copolymerdispersion mit 96 Gew.-% Ethylacrylat und 4 Gew.-% Methacrylimid zugegeben wurden. Die mittlere Teilchengröße in der agglomerierten Dispersion betrug 0,1 µm (bei d 10), 0,35 µm (bei d 50) bzw. 0,5 µm (bei d 90). Schließlich wurde das ABS aus der Dispersion mit Hilfe von MgSO₄ ausgefällt, zentrifugiert und getrocknet.

Die zweite ABS-Komponente bestand aus 55 Gewichtsteilen eines Styrol-Acrylnitril-Copolymers mit einem Gewichtsverhältnis von 65% Styrol zu 35% Acrylnitril und einer Viskositätszahl von 60 ml/g in DMF bei 23 °C (nach DIN 53726).

Das verwendete ABS wurde durch Mischen von 45 Gewichtsteilen der ersten Komponente und 55 Gewichtsteilen der zweiten Komponente auf einem Extruder hergestellt.

Der ASA-Anteil für die erfindungsgemäßen Formmassen bestand ebenfalls aus zwei Komponenten.

Die erste Komponente war ein in Emulsion hergestellter Pfropfkautschuk, bestehend aus 60 Gewichtsteilen eines Polybutylacrylat-Dihydrodicyclopentadienylacrylat-Copolymeren mit einem Gewichtsverhältnis von 98% Polybutylacrylat zu 2% Dihydrodicyclopentadienylacrylat, gepfropft mit 40 Gewichtsteilen Styrol und Acrylnitril, wobei 75 Gew.-% Styrol und 25 Gew.-% Acrylnitril verwendet werden. Die durchschnittliche Teilchengröße betrug 0,4 µm, wobei die Teilchengrößen-Verteilung eine relativ geringe Varianz aufwies.

Die zweite Komponente entsprach der zweiten Komponente des verwendeten ABS. Die Mischung beider Komponenten erfolgte in den gleichen Gewichtsverhältnissen und auf die gleiche Weise wie die Vermischung der beiden ABS-Komponenten.

POM, ABS und TPU, bzw. POM, ASA und TPU wurden in einem Taumler gemischt und bei einer Temperatur von 175 bis 220 °C extrudiert.

Die Schlagzähigkeit AK wurde mittels eines Schlagbiegeversuchs Charpy nach ISO 179 1eA(F) bei 23 °C bestimmt. Der Zugelastizitätsmodul E wurde mittels eines Zugversuchs nach ISO 527-2 bei ebenfalls 23 °C ermittelt. Schließlich wurde der Oberflächenglanz von aus den Formmassen gespritzten Rundscheiben visuell bestimmt.

Die Versuchsergebnisse sind in Tabelle 1 wiedergegeben.

| | TPU-Gehalt [Gew.-%] | ABS-Gehalt [Gew.-%] | ASA-Gehalt [Gew.-%] | POM-Gehalt [Gew.-%] | AK [kJ/m₂] | E-Modul [N/mm₂] | Oberfläche visuell |
|---|---|---|---|---|---|---|---|
| **V-Masse 1** | 20 | 0 | 0 | 80 | 10,7 | 1600 | matt |
| **V-Masse 2** | 15 | 5 | 0 | 80 | 10,8 | 1800 | glänzend |
| **V-masse 3** | 10 | 10 | 0 | 80 | 6,5 | 1900 | glänzend |
| **E-Masse 1** | 15 | 0 | 5 | 80 | 13,1 | 1790 | matt |
| **E-Masse 2** | 10 | 0 | 10 | 80 | 8,9 | 1890 | matt |
| V-Masse = Vergleichsmasse mit ABS E-Masse = erfindungsgemäße Masse mit ASA | | | | | | | |

Aus der Tabelle wird ersichtlich, daß die erfindungsgemäßen Formmassen einen hohen E-Modul und eine gute Schlagzähigkeit und darüber hinaus eine matte Oberfläche aufweisen.

## Patentansprüche

1. Schlagzähmodifizierte Polyoxymethylen-Zusammensetzung, gekennzeichnet durch
(a) 5 bis 10 Gew.-% Acrylnitril-Sryrol-Acrylat-Polymer,
(b) 10 bis 15 Gew.-% thermoplastische Polyurethane und
(c) 75 bis 85 Gew.-% Polyoxymethylen, so daß diese Komponenten gemeinsam 100 Gew.-% ergeben, sowie
(d) 0 bis 50, vorzugsweise 0 bis 30, besonders bevorzugt 0 bis 20 Gew.-%, bezogen auf die Summe der Komponenten Acrylnitril-Styrol-Acrylat, thermoplastische Polyurethane und Polyoxymethylen, an üblichen Zusatzstoffen und Verarbeitungshilfsmitteln.

2. Schlagzähmodifizierte Polyoxymethylen-Zusammensetzung nach Anspruch 1, dadurch gekennzeichnet, daß das Acrylnitril-Sryrol-Acrylat-Polymer a), besteht aus
(a) 30 bis 95, vorzugsweise 45 bis 80 Gew.-% einer ersten Phase und 5 bis 70, vorzugsweise 20 bis 55 Gew.- % einer zweiten Phase, wobei
aa) die erste Phase aus einem oder mehreren harten Polymeren besteht,
wobei ein hartes Polymer aus einer Mischung hergestellt ist, die folgende Bestandteile enthält:
(1) 30 bis 95, vorzugsweise 50 bis 90, besonders bevorzugt 60 bis 85 Gew.-% mindestens eines vinylaromatischen Monomers,
(2) 0 bis 50, vorzugsweise 10 bis 40, besonders bevorzugt 15 bis 40 Gew.-% Acrylnitril und/oder Methacrylnitril,
(3) 0 bis 50, vorzugsweise 0 bis 40, besonders bevozugt 0 bis 25 Gew.-% mindestens eines Esters der Acrylsäure oder Methacrylsäure, insbesondere Methylmethacrylat,
(4) 0 bis 40, vorzugsweise 0 bis 30, besonders bevorzugt 0 bis 20 Gew.-% mindestens eines weiteren ethylenisch ungesättigten Monomers, und
(5) 0 bis 70, vorzugsweise 0 bis 40, besonders bevorzugt 0 bis 35 Gew.-% weiterer Polymere,
so daß die Bestandteile (1) bis (5) der ersten Phase zusammen 100 Gew.-% ergeben,
und
bb) die Zweite Phase aus mindestens einem Pfropfkautschuk besteht,
wobei der Pfropfkautschuk aus einer Mischung hergestellt ist, die folgende Bestandteile enthält:
(1) 20 bis 90, vorzugsweise 30 bis 80 Gew.-% mindestens eines Propfsubstrats mit einer Glasübergangstemperatur < 0 °C, vorzugsweise < -20 °C, das seinerseits aus einer Mischung hergestellt ist, die folgende Bestandteile enthält:
i) 50 bis 100, vorzugsweise 75 bis 99 Gew.- % mindestens eines Esters der Acrylsäure, vorzugsweise n-Butylacrylat oder 2-Ethylhexylacrylat,
ii) 0 bis 20, vorzugsweise 1 bis 10 Gew.-% mindestens eines polyfunktionellen vernetzenden Monomers,
iii) 0 bis 40, vorzugsweise 0 bis 20 Gew.-% mindestens eines weiteren monoethylenisch ungesättigten Monomers,
so daß die Bestandteile i) bis iii) 100 Gew.-% ergeben;
(2) 10 bis 80, vorzugsweise 10 bis 60 Gew.-% mindestens einer Pfropfauflage, die ihrerseits aus einer Mischung hergestellt ist, die folgende Bestandteile enthält:
i) 20 bis 90, vorzugsweise 40 bis 85, besonders bevorzugt 60 bis 80 Gew.-% mindestens eines vinylaromatischen Monomers,
ii) 5 bis 40, vorzugsweise 10 bis 35, besonders bevorzugt 15 bis 30 Gew.-% Methacrylnitril und/oder Acrylnitril
iii) 0 bis 50, vorzugsweise 0 bis 30, besonders bevorzugt 0 bis 20 Gew.-% mindestens eines Esters der Acrylsäure oder Methacrylsäure, insbesondere Methylmethacrylat,
iv) 0 bis 50, vorzugsweise 0 bis 45, besonders bevorzugt 0 bis 25 Gew.-% mindestens eines weiteren ethylenisch ungesättigten Monomers,
so daß die Bestandteile i) bis iv) zusammen 100 Gew.-% ergeben,
das Pfropfsubstrat (1) und die Pfropfauflage (2) zusammen 100 Gew.-% ergeben und
die erste und die zweite Phase zusammen 100 Gew.-% ergeben, wobei das Gewichtsverhältnis zwischen der ersten und der zweiten Phase von 95:5 bis 30:70, vorZugsweise von 80:20 bis 45:55 beträgt.

3. Schlagzähmodifizierte Polyoxymethylen-Zusammensetzung nach Anspruch 2, dadurch gekennzeichnet, daß zur Herstellung der ersten Phase (aa) des Acrylnitril-Styrol-Acrylats (a) mindestens ein hartes Polymer mit einer Glasübergangstemperatur > 50 °C verwendet wird.

4. Schlagzähmodifizierte Polyoxymethylen-Zusammensetzung nach Anspruch 2 oder 3, dadurch gekennzeichnet, daß zur Herstellung eines harten Polymers der ersten Phase (aa) des Acrylnitril-Styrol-Acrylats (a) und/oder als Bestandteil einer Pfropfauflage (2) der zweiten Phase (bb) des Acrylnitril-Styrol-Acrylats (a) mindestens ein weiteres ethylenisch ungesättigtes Monomer (4) bzw. (iv) verwendet wird, das aus folgender Gruppe ausgewählt ist: Maleinsäureanhydrid, Acrylamid, Methacrylamid, n-Phenylmaleinimid.

5. Schlagzähmodifizierte Polyoxymethylen-Zusammensetzung nach einem der Ansprüche 2 bis 4, dadurch gekennzeichnet, daß zur Herstellung der ersten Phase (aa) des Acrylnitril-Styrol-Acrylats (a) mindestens ein hartes Polymer verwendet wird, das als weiteres Polymer (5) Polycarbonat oder Polymethylmethacrylat enthält.

6. Schlagzähmodifizierte Polyoxymethylen-Zusammensetzung nach einem der Anspräche 2 bis 5, dadurch gekennzeichnet, daß zur Herstellung eines Pfropfsubstrats (1) der zweiten Phase (bb) des Acrylnitril-Styrol-Acrylats (a) mindestens ein polyfunktionelles vernetzendes Monomer (ii) verwendet wird, das aus folgender Gruppe ausgewählt ist: Divinylbenzol, Diallylmaleat, Diallylfumarat, Diallylphthalat, Allylmethacrylat, Triallylisocyanurat, Triallylcyanurat, Butadien, Isopren, Dihydrodicyclopentadienylacrylat, besonders bevorzugt Dihydrodicyclopentadienylacrylat.

7. Schlagzähmodifizierte Polyoxymethylen-Zusammensetzung nach einem der Ansprüche 2 bis 6, dadurch gekennzeichnet, daß zur Herstellung eines Pfropfsubstrats (1) der zweiten Phase (bb) des Acrylnitril-Styrol-Acrylats (a) mindestens ein weiteres monoethylenisch ungesättigtes Monomer (iii) verwendet wird, das aus folgender Gruppe ausgewählt ist: Methylvinylether, Styrol, Acrylnitril, Derivate der Acryl- oder Methacrylsäure, insbesondere Methacrylat, Methylmethacrylat, Ethylacrylat, Glycidylacrylat, Glycidylmethacrylat, substituierte oder unsubstituierte Butadiene, substituierte oder unsubstituierte Isoprene.

8. Verwendung einer schlagzähmodifizierten Polyoxymethylenzusammensetzung nach einem der Ansprüche 1 bis 7 zur Herstellung eines Formkörpers.

9. Formkörper, dadurch gekennzeichnet, daß er unter Verwendung einer schlagzähmodifizierten Polyoxymethylenzusammensetzung nach einem der Ansprüche 1 bis 7 hergestellt ist.
